# DEMANDE DE BREVET EUROPEEN

(11) **EP 1 092 597 A1**
(43) Date de publication de la demande: **18.04.2001**
(21) Numéro de dépôt: 00402787.6
(22) Date de dépôt: 10.10.2000
(51) Int. Cl.: B60R 21/01, B60R 16/02

(54) **Système de retenue connecté par une ligne de bus**

(30) Priorité: 11.10.1999 FR 9912742
(71) Demandeur: GIAT INDUSTRIES, 78000 Versailles (FR)
(72) Inventeur: Loison, Jérôme, 18000 Bourges (FR); Pezard, Michel, 18390 Saint Germain du Puy (FR)
(74) Mandataire: Célanie, Christian

(57) **Abrégé**

L'invention a pour objet un dispositif de sécurité (1) pour véhicule, dispositif comprenant au moins un actionneur, tel un initiateur pyrotechnique (3a,3b,3c,3d) destiné à déclencher un moyen de protection, tel un coussin gonflable, et au moins un capteur d'environnement (4a,4b,4c), par exemple de décélération ou de choc. Capteurs et actionneurs ou initiateurs sont reliés à une unité centrale électronique de commande (2) par l'intermédiaire d'un BUS (5) de transmission de données. L'unité de commande peut transmettre à un ou plusieurs actionneurs ou initiateurs (3a,3b,3c,3d) un premier signal de déclenchement. Le dispositif est caractérisé en ce qu'au moins un capteur (4a,4b,4c) comporte des moyens électroniques de commande susceptibles de transmettre à au moins un actionneur ou initiateur un deuxième signal de déclenchement.

L'invention vise également un capteur utilisé par un tel dispositif ainsi qu'un procédé de commande de ce dispositif.

## Description

Le domaine technique de l'invention est celui des dispositifs de sécurité pour véhicule qui comprennent au moins un actionneur, tel un initiateur pyrotechnique destiné à déclencher un moyen de protection, tel un coussin gonflable.

Généralement les actionneurs ou initiateurs pyrotechniques sont tous reliés à une unité de commande électronique qui reçoit les signaux de détection fournis par un ou plusieurs senseurs d'environnement, par exemple des détecteurs de chocs ou des accéléromètres.

Afin de simplifier le câblage du véhicule, et pour permettre une introduction ultérieure de nouveaux initiateurs et/ou de nouveaux senseurs, les liaisons se font de préférence par l'intermédiaire d'un BUS de transmission de données, par exemple un BUS parallèle ou un BUS série comportant deux fils.

Le brevet EP834813 décrit un tel dispositif de sécurité.

Un inconvénient des dispositifs connus est qu'en cas de rupture du BUS, par exemple consécutif à un choc, il y a un risque que l'ordre de déclenchement ou mise à feu du ou des initiateurs appropriés ne puisse être transmis.

De plus, on prévoit maintenant des systèmes de protections latéraux gonflables disposés dans les portières et couplés à un ou plusieurs détecteurs de chocs latéraux.

Une portière n'a pas une structure mécanique suffisante pour absorber une partie de l'énergie du choc. Il est donc indispensable que le système de protection latéral soit déployé le plus vite possible dès la détection du choc. En effet un traitement de l'information de choc par l'unité centrale demande 20 ms avant que l'initiateur pyrotechnique ne soit déclenché, alors qu'un choc latéral impose un déclenchement des protections dans un délai de 2 ms.

C'est le but de la présente invention que de proposer un dispositif permettant de pallier de tels inconvénients :

Ainsi le dispositif selon l'invention a une fiabilité supérieure à celle des dispositifs connus car il permet d'assurer un déploiement des protections malgré une coupure du BUS de transmission de données. Le dispositif permet également de réduire le délai de déploiement de protections, notamment latérales.

Ainsi l'invention a pour objet un dispositif de sécurité pour véhicule comprenant au moins un actionneur, tel un initiateur pyrotechnique destiné à déclencher un moyen de protection, tel un coussin gonflable, et au moins un capteur d'environnement, par exemple de décélération ou de choc, capteurs et actionneurs ou initiateurs étant reliés à une unité centrale électronique de commande par l'intermédiaire d'un BUS de transmission de données, l'unité de commande recevant les signaux provenant des capteurs et pouvant transmettre à un ou plusieurs actionneurs ou initiateurs un premier signal de déclenchement, dispositif caractérisé en ce qu'au moins un capteur comporte des moyens électroniques de commande susceptibles de transmettre à au moins un actionneur ou initiateur un deuxième signal de déclenchement.

L'unité de commande sera avantageusement configurée de façon à pouvoir, par l'intermédiaire du BUS, inscrire dans une première mémoire ou registre d'au moins un capteur les codes d'identification du ou des actionneurs ou initiateurs qu'il doit pouvoir déclencher.

Selon une autre caractéristique de l'invention, l'unité de commande pourra être configurée de façon à pouvoir, par l'intermédiaire du BUS, inscrire une valeur de retard dans un système retardateur intégré dans au moins un capteur susceptible d'émettre le deuxième signal, ledit retard devant intervenir entre la détection par le capteur d'une variation du paramètre dépassant le seuil et l'émission du deuxième signal de déclenchement.

L'unité de commande pourra également être configurée de façon à pouvoir, par l'intermédiaire du BUS, inscrire une valeur de retard dans un système retardateur intégré dans au moins un actionneur ou initiateur pyrotechnique, ledit retard devant intervenir entre la réception par l'initiateur d'un signal de déclenchement et le déclenchement effectif.

Selon d'autres caractéristiques :
- le BUS pourra comprendre deux fils et assurer à la fois la fourniture en énergie aux actionneurs ou initiateurs et aux capteurs ainsi que la transmission des données,
- le ou les capteurs pourront être dotés d'une réserve d'énergie, telle un condensateur, qui se trouvera chargée par le BUS lors de la mise sous tension du dispositif,
- le ou les actionneurs ou initiateurs pourront être dotés d'une réserve d'énergie, telle un condensateur, qui se trouvera chargée par le BUS lors de la mise sous tension du dispositif.

L'invention a également pour objet un capteur destiné à être intégré dans un tel dispositif et présentant une structure permettant d'accroître la fiabilité et la réactivité des dispositifs de sécurité.

Ainsi l'invention a pour objet un capteur d'une information d'environnement, notamment de choc ou de décélération, et comportant ainsi un moyen senseur d'une variation d'au moins un paramètre physique de l'environnement, capteur destiné à être mis en oeuvre dans un dispositif de sécurité pour automobile et caractérisé en ce qu'il comporte des moyens électroniques de commande susceptibles de transmettre à au moins un actionneur ou initiateur pyrotechnique un signal de déclenchement lorsque la variation du paramètre dépasse un certain seuil.

Ce capteur comportera une interface entrée/sortie destinée à recevoir les signaux transmis par une unité centrale de commande au travers d'un BUS de transmission et à transmettre au travers de ce BUS des messages à l'unité centrale et à au moins un actionneur ou initiateur.

Le capteur pourra comporter une réserve d'énergie telle un condensateur.

Il comportera également une première mémoire ou registre destiné à recevoir les codes d'identifications du ou des actionneurs ou initiateurs qu'il doit pouvoir déclencher.

Il pourra enfin comporter une deuxième mémoire ou registre destiné à recevoir un code d'identification.

Avantageusement la deuxième mémoire ou registre sera non volatile et la première mémoire pourra être programmée à partir de l'unité centrale.

Selon une autre caractéristique de l'invention, les moyens électroniques de commande intégrés au capteur comporteront un système retardateur permettant d'assurer l'émission du signal de déclenchement avec un retard par rapport à la détection d'une variation du paramètre dépassant le seuil.

La valeur du retard d'émission du signal de déclenchement pourra être programmable à partir de l'unité centrale.

Le capteur pourra comporter des moyens pouvant assurer au moins un test de bon fonctionnement.

L'invention a enfin pour objet un procédé de commande d'un dispositif de sécurité, procédé permettant d'accroître la fiabilité et la réactivité de tels dispositifs.

Ainsi l'invention a pour objet un procédé de commande d'un dispositif de sécurité pour automobile, procédé dans lequel l'unité de commande dialogue au travers d'un BUS de transmission de données avec au moins un actionneur ou initiateur pyrotechnique et au moins un capteur d'environnement, le dialogue se faisant par un signal formé d'une succession de créneaux, un premier signal de déclenchement ayant une première fréquence étant émis sur le BUS par l'unité centrale pour déclencher le déclenchement ou l'initiation d'un ou plusieurs actionneurs ou initiateurs, procédé caractérisé en ce qu'on peut émettre sur le BUS un deuxième signal de déclenchement ayant la même fréquence que le premier signal à partir d'au moins un capteur d'environnement.

Un troisième signal, ou signal d'échange de données, ayant une deuxième fréquence inférieure à celle des deux autres signaux, pourra être émis sur le BUS pour échanger les données entre l'unité centrale, les capteurs et les actionneurs ou initiateurs, le premier et le deuxième signal ayant priorité sur le troisième signal.

Avantageusement, le deuxième signal de déclenchement et/ou le troisième signal auront la même amplitude que le premier signal.

Le troisième signal pourra être utilisé par l'unité centrale pour programmer au moins un capteur susceptible d'émettre le deuxième signal en inscrivant dans une première mémoire ou registre de ce capteur le code d'identification du ou des actionneurs ou initiateurs qu'il doit pouvoir déclencher.

Le troisième signal pourra être utilisé par l'unité centrale pour programmer une valeur de retard dans un système retardateur intégré dans au moins un capteur susceptible d'émettre le deuxième signal, ledit retard devant intervenir entre la détection par le capteur d'une variation du paramètre dépassant le seuil et l'émission du deuxième signal de déclenchement.

Le troisième signal pourra être utilisé par l'unité centrale pour programmer une valeur de retard dans un système retardateur intégré dans au moins un actionneur ou initiateur pyrotechnique, ledit retard devant intervenir entre la réception par l'initiateur d'un signal de déclenchement et le déclenchement effectif.

Le troisième signal pourra enfin être utilisé par l'unité centrale pour interroger les capteurs et/ou les actionneurs ou initiateurs sur l'état de leur programmation, et/ou celui de leur réserve d'énergie et/ou sur le résultats d'au moins un test de fonctionnement.

L'invention sera mieux comprise à la lecture de la description de différents modes de réalisation de l'invention, description faite en référence aux dessins annexés et dans lesquels :
- la figure 1 est un schéma d'ensemble d'un dispositif de sécurité selon l'invention,
- la figure 2 est un schéma représentant un initiateur pyrotechnique mis en oeuvre dans un dispositif selon l'invention,
- la figure 3 est un schéma représentant un capteur selon l'invention,
- la figure 4 est une courbe montrant les créneaux représentatifs des états 0 et 1 pour un signal émis suivant le procédé selon l'invention,
- la figure 5 est un exemple d'un signal émis suivant le procédé selon l'invention.

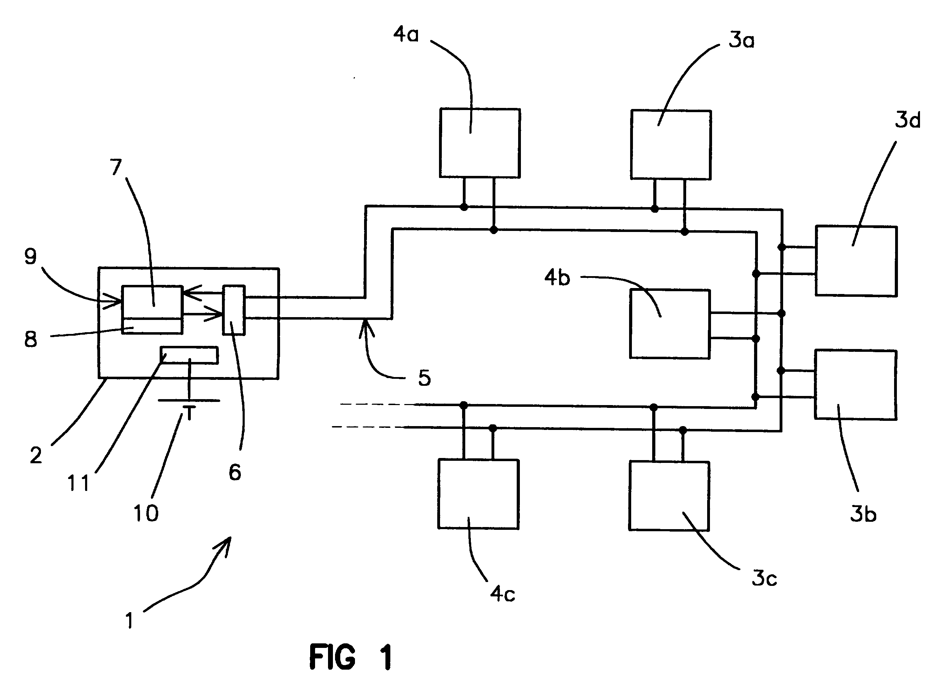

En se reportant à la figure 1, un dispositif de sécurité 1 pour véhicule comprend une unité centrale 2 de commande électronique qui est reliée, par l'intermédiaire d'un BUS 5 de transmission de données, à différents récepteurs qui sont des actionneurs ou initiateurs pyrotechnique 3a, 3b, 3c, 3d ou bien des capteurs d'environnement 4a, 4b, 4c.

Les capteurs 4a, 4b, 4c sont par exemple des capteurs de choc (jauges de contraintes) ou de décélération. Ces capteurs comportent des moyens assurant la détection des variations d'une grandeur d'environnement, par exemple un accéléromètre ou un capteur de déformation.

Les initiateurs pyrotechniques sont destinés d'une façon classique à déclencher un moyen de protection (non représenté), par exemple un coussin gonflable, un prétensionneur de ceinture, un système assurant la rupture d'un pédalier ou encore le déploiement d'un pare choc...

L'unité de commande 2 comprend une interface entrée/sortie 6 qui assure la modulation et la démodulation des signaux échangés sur le BUS. Cette interface est reliée à un calculateur électronique intégré 7 qui assure le traitement des données reçues par le BUS et génère les signaux émis sur le BUS par l'unité de commande. Le calculateur est associé à différentes mémoires ou registres 8 qui contiennent les données de programmation assurant le fonctionnement du dispositif.

Le calculateur peut également recevoir par une entrée 9 une programmation externe notamment lors de l'initialisation du dispositif (première mise en place dans un véhicule) ou lors d'une modification du dispositif de sécurité (introduction d'autres initiateurs et/ou d'autres capteurs). Le calculateur pourra également être relié à un ou plusieurs systèmes de prédiction de choc.

L'unité de commande 2 est également reliée à une source d'énergie 10, par exemple la batterie du véhicule et elle comporte un circuit 11 de gestion de l'énergie qui fournit une alimentation stabilisée à l'unité de commande et assure également la fourniture (par l'intermédiaire du BUS 5) d'une tension d'alimentation aux différents initiateurs 3 et aux différents capteurs 4.

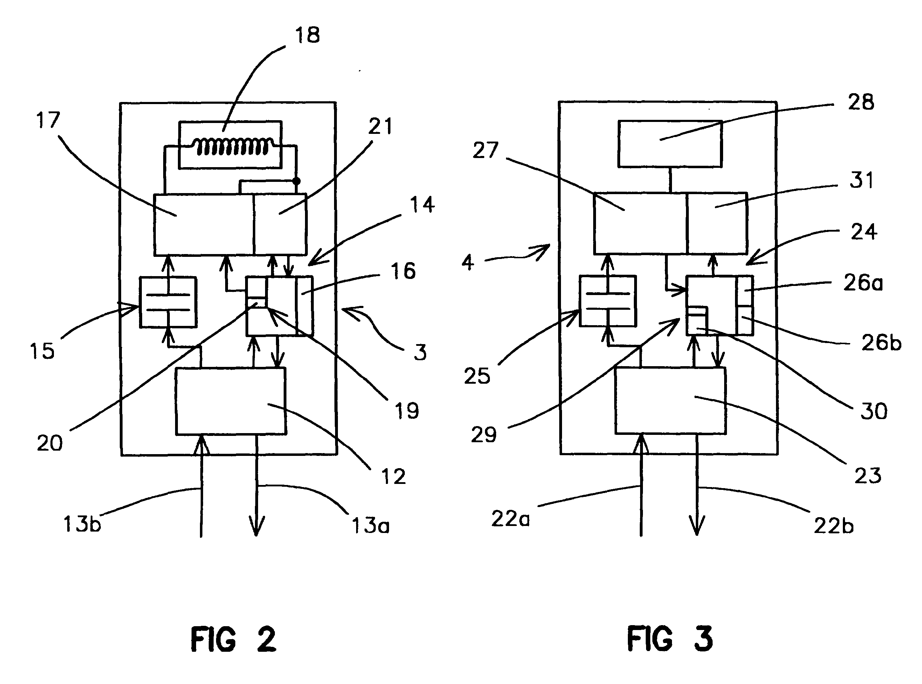

La figure 2 représente schématiquement un initiateur pyrotechnique 3 utilisé par le dispositif selon l'invention.

Cet initiateur est relié par des broches 13a,13b au BUS 5. Il comprend une interface entrée/sortie 12 qui assure la modulation et la démodulation des signaux échangés sur le BUS 5. Elle assure également la séparation entre les signaux et la puissance électrique transmis par l'intermédiaire du bus 5.

Les signaux sont traités ou générés par une unité de calcul 14 intégrée dans l'initiateur 3. La puissance est utilisée pour charger une réserve d'énergie 15, telle un condensateur.

L'unité de calcul 14 est par exemple constituée par un microprocesseur. Elle est associée à une ou plusieurs mémoires ou registres 16 et elle commande un interrupteur de puissance 17 qui est destiné à assurer l'initiation d'un inflammateur 18, par exemple un fil chaud ou bien un pont semi conducteur placé au contact d'une composition pyrotechnique (non représentée).

Les mémoires 16 contiennent différentes données utiles au bon fonctionnement de l'initiateur. Elles comprendront notamment au moins une mémoire ou registre non volatil à l'intérieur duquel sera introduit un code d'identification de l'initiateur 3 avant ou lors de la mise en place de celui ci dans le dispositif 1.

L'unité de calcul 14 comporte également un système retardateur 19 qui exploite une valeur de retard disposée dans une mémoire ou registre programmable 20 de l'unité de calcul 14. Comme cela sera explicité par la suite, ce retard doit intervenir entre la réception par l'initiateur 3 d'un signal de déclenchement et la commande effective de l'interrupteur de puissance 17, donc la mise à feu de l'initiateur.

Enfin l'unité de calcul 14 pilote un ou plusieurs circuits électroniques de test 21 qui ont pour fonction de contrôler différents paramètres de fonctionnement de l'initiateur, tels que : la continuité électrique du pont ou du fil de l'inflammateur 18, la valeur de sa résistance, le niveau de charge de la réserve d'énergie 15...

La charge de la réserve d'énergie 15 s'effectue lors de la mise sous tension du dispositif de sécurité 1. Après charge, l'initiateur 3 utilise pour le fonctionnement normal de ses circuits l'énergie qui est fournie par le BUS.

L'énergie stockée dans la réserve 15 est utilisée pour assurer l'initiation par décharge capacitive de l'inflammateur 18 ainsi que pour permettre le fonctionnement normal des circuits de l'initiateur en cas de rupture du BUS.

La figure 3 montre un capteur 4 selon l'invention qui est destiné à être mis en oeuvre dans le dispositif de sécurité 1.

Ce capteur est lui aussi relié par des broches 22a,22b au BUS 5. Il comprend une interface entrée/sortie 23 qui assure la modulation et la démodulation des signaux échangés sur le BUS 5. Elle assure également la séparation entre les signaux et la puissance électrique transmis par l'intermédiaire du bus 5.

Les signaux sont traités ou générés par des moyens électroniques de commande 24 intégrés au capteur 4. La puissance est utilisée pour charger une réserve d'énergie 25, telle un condensateur.

Les moyens de commande 24 sont par exemple constitués par un microprocesseur. Ils comportent une ou plusieurs mémoires ou registres 26a,26b et reçoivent les signaux fournis par un circuit conditionneur de signal 27 relié à un moyen senseur 28 (par exemple un accéléromètre ou un capteur de déformation). Les moyens de commande 24 permettront de détecter une variation du paramètre physique d'environnement (par exemple accélération) qui dépasse un certain seuil mis en mémoire.

Selon une caractéristique essentielle de l'invention, une première mémoire 26a est destinée à recevoir les codes d'identification d'un ou plusieurs initiateurs 3 que le capteur 4 doit pouvoir déclencher de façon autonome si le seuil du paramètre physique mesuré se trouve dépassé.

Une deuxième mémoire 26b est une mémoire non volatile à l'intérieur de laquelle est introduit un code d'identification du capteur 4 avant ou lors de la mise en place de celui ci dans le dispositif 1.

Les moyens de commande 24 comportent également un système retardateur 29 qui exploite une valeur de retard disposée dans une mémoire ou registre programmable 30 des moyens de commande 24. Comme cela sera explicité par la suite, ce retard pourra intervenir entre la détection d'une variation du paramètre mesuré par le senseur 28 qui dépasse un certain seuil et l'émission d'un signal de déclenchement par le capteur 4.

Comme pour l'initiateur 3, les moyens de commande 24 piloteront un ou plusieurs circuits électroniques de test 31 qui ont pour fonction de contrôler différents paramètres de fonctionnement du capteur, tels que : l'impédance ou la capacitance, le niveau de charge de la réserve d'énergie 25, etc...

La charge de la réserve d'énergie 25 s'effectue là encore lors de la mise sous tension du dispositif de sécurité 1. Après charge, le capteur 4 utilisera pour le fonctionnement normal de ses circuits l'énergie qui est fournie par le BUS.

L'énergie stockée dans la réserve 25 est utilisée pour permettre le fonctionnement normal des circuits du capteur en cas de rupture du BUS.

Le fonctionnement du dispositif selon l'invention est le suivant :

Lors de l'installation du dispositif dans un véhicule une programmation initiale est réalisée qui permet d'affecter à chaque récepteur (initiateur ou capteur) un code d'identification unique. Ce code permet à l'unité centrale d'interroger ou commander via le BUS un ou plusieurs récepteurs particuliers. Il lui permet également de reconnaître l'origine des messages transmis par les différents récepteurs.

Ces codes d'identification sont introduits dans des mémoires non volatiles classiques afin d'éviter toute perte de données lors de la coupure de l'énergie.

L'unité centrale reçoit également une programmation appropriée qui lui permet de gérer la configuration du dispositif. Cette programmation précisera ainsi quels sont les paramètres de fonctionnement normaux des différents récepteurs (capteurs et initiateurs). L'unité centrale pourra alors périodiquement demander à chaque récepteur de procéder à un test de ses paramètres. Le récepteur transmettra les résultats du test et l'unité centrale pourra afficher une alarme en cas de défaillance d'un récepteur donné.

La programmation de l'unité centrale précise également quels initiateurs doivent être déclenchés en réponse à un niveau de choc donné (intensité, direction) ainsi qu'à une configuration de véhicule donnée (nombre d'occupants du véhicule, taille et poids des occupants...), et quelle est le scénario ou la séquence de déploiement des initiateurs qui doit être adoptée.

Ainsi, à titre d'exemple, la figure 1 montre trois zones particulière d'un véhicule: une zone frontale comprenant un capteur de choc 4b et deux initiateurs 3b et 3d correspondant à deux coussins gonflables (conducteur et passager), une zone latérale gauche comprenant un capteur de choc 4a et un initiateur 3a pour un coussin gonflable de portière, une zone latérale droite comprenant un capteur de choc 4c et un initiateur 3c pour coussin gonflable de portière.

Un choc au niveau d'une portière devra conduire au gonflage rapide de la protection de la portière considérée.

Un choc frontal devra conduire, suivant le nombre de personnes, au gonflage de un ou deux des coussins frontaux commandés par les initiateurs 3b, 3d avec éventuellement un retard entre chaque gonflage.

Un choc composite initiera le gonflage de plusieurs coussins frontaux et latéraux.

Lors d'un choc latéral il est indispensable que le coussin de protection soit déclenché au plus vite, la résistance mécanique de la portière étant insuffisante. A cet effet et conformément à l'invention, les capteurs sont capables de commander eux même le déclenchement d'un ou plusieurs initiateurs dont les codes d'identification ont été introduits dans leur mémoire 26a.

Une telle disposition permet également d'assurer une initiation des protections même en cas de rupture du BUS de liaison 5. Le fonctionnement étant alors assuré grâce à la présence des réserves d'énergie 15,25. Le déclenchement pourra avantageusement être assuré au moins 150 millisecondes après la rupture.

Lors de la mise sous tension du dispositif, l'unité centrale assurera donc tout d'abord la charge des réserves d'énergies 15 et 25 des différents récepteurs. Cette charge consommera un courant maximum par récepteur de l'ordre de 1 A pendant 1 milliseconde. La consommation en régime permanent étant de l'ordre de 1 milliampère par récepteur.

Une fois cette première étape accomplie, l'unité centrale réalisera la programmation des différents récepteurs en introduisant notamment dans les mémoires 26a des différents capteurs les codes d'identification des initiateurs qui doivent pouvoir être déclenchés directement par le capteur.

Ainsi à titre d'exemple en référence à la figure 1, on donnera au capteur 4a le code de l'initiateur 3a et au capteur 4c celui de l'initiateur 3c.

Aucune valeur de retard ne sera introduite dans les mémoires 20 et 30 des systèmes retardateurs des initiateurs 3a,3c et des capteurs 4a,4c. On est assuré ainsi qu'en cas de détection d'un choc latéral, le déclenchement du coussin approprié soit provoqué instantanément. Cet ordre de déclenchement émis par le capteur 4a ou 4c est bien entendu reçu via le BUS 5 (si celui ci n'est pas rompu) par l'unité centrale 2 qui prend en compte le changement d'état des moyens de protection.

On introduira dans le capteur 4b les codes d'identification des initiateurs 3b et 3d. On introduira également alors une valeur de retard de l'ordre de 30 millisecondes dans la mémoire 30 du système retardateur du capteur 4b. Une telle disposition permet de laisser à l'unité centrale l'initiative du déclenchement des protections frontales. Le capteur 4b n'intervenant qu'en cas de défaillance de l'unité centrale, consécutive par exemple à une rupture du BUS 5.

On pourra introduire un retard de l'ordre de 3 millisecondes dans la mémoire 20 du système retardateur de l'initiateur 3b. Une telle disposition permet d'éviter le déclenchement simultané de deux systèmes pyrotechniques et la surpression préjudiciable aux tympans qui en résulte dans l'habitacle du véhicule.

Les différents échanges de données sur le BUS (et notamment les programmations) sont effectués en utilisant un protocole de dialogue approprié. On pourra par exemple utiliser un protocole half duplex asynchrone avec un codage des bits de données en largeur de créneaux.

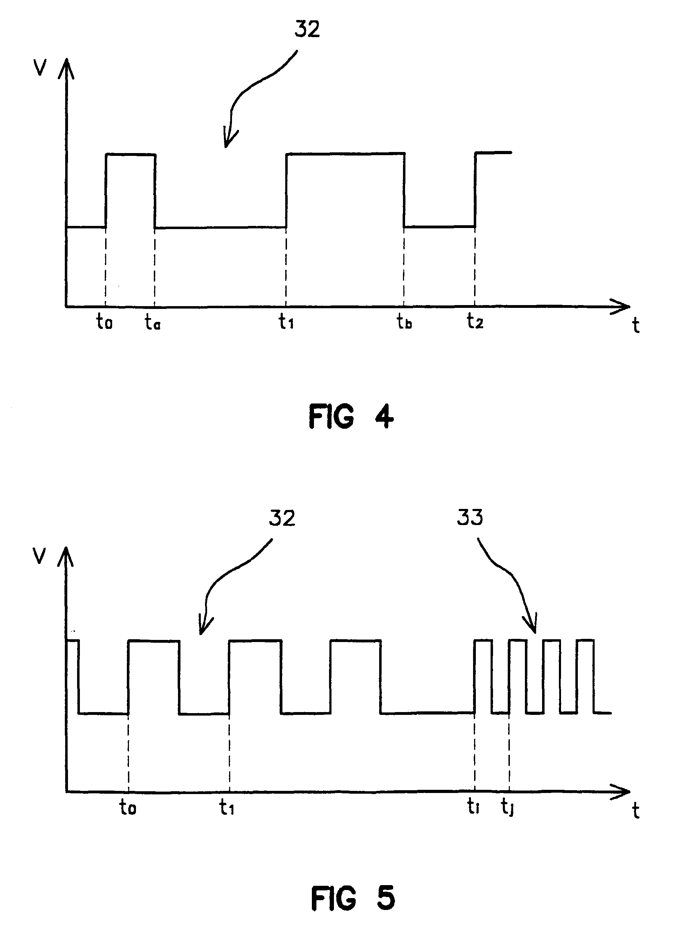

La figure 4 montre un exemple d'un tel codage bien connu de l'Homme du Métier. La courbe 32 dans un repère temps/tension présente la succession d'un état logique 0 et d'un état logique 1. L'état logique 0 se situe entre les instants t0 et t1. Il est caractérisé par une largeur du créneau (ta-t0) qui est strictement inférieure à la moitié de l'intervalle t1-t0. L'état logique 1 se situe entre les instants t1 et t2. Il est caractérisé par une largeur du créneau (tb-t1) qui est supérieure ou égale à la moitié de l'intervalle t2-t1.

t2-t1 est égal à t1-t0 et c'est la période fondamentale du signal transmis.

Les circuits électroniques de l'unité centrale et des initiateurs et capteurs sont capables de déchiffrer de tels signaux transmis le long du BUS 5 de façon à les transformer en une succession de mots binaires permettant de déclencher certaines actions.

La figure 5 montre un exemple de signal ainsi transmis. Une première partie 33 du signal est formée d'une succession de créneaux à une première fréquence F1. Elle est précédée par une deuxième partie 34 formée elle aussi par une succession de signaux mais à une deuxième fréquence F2 qui est inférieure à F1 (la période fondamentale du premier signal tj-ti est inférieure à celle du premier signal t1-t0).

Conformément au procédé selon l'invention la première fréquence (haute fréquence F1) est émise sur le BUS pour déclencher le déclenchement ou l'initiation d'un ou plusieurs initiateurs 3.

Selon l'invention ce signal à haute fréquence peut être émis soit par l'unité centrale de commande 2 (premier signal de déclenchement) soit par un capteur 4 donné (deuxième signal de déclenchement). La fréquence du signal de déclenchement est la même, qu'il soit émis par l'unité centrale ou par un capteur. Ainsi l'initiateur visé par le signal de déclenchement est actionné de la même façon par un capteur ou par l'unité centrale.

Selon l'invention la fréquence basse F2 est utilisée pour un troisième signal, ou signal d'échange de données.

Ce signal basse fréquence est émis sur le BUS pour échanger les données entre l'unité centrale et les initiateurs et capteurs. Il a même amplitude que celle des signaux de déclenchement. Une telle disposition permet de simplifier l'électronique tant celle de l'unité centrale que celle incorporée dans les initiateurs et capteurs. Il n'est en effet pas alors nécessaire de prévoir des circuits d'interface capables de réduire ou élever le niveau de tension du signal (comme l'impose le dispositif décrit par EP834813). De plus l'utilisation d'un signal de déclenchement de niveau élevé permet d'alimenter de façon fiable un plus grand nombre d'initiateurs que ne le permet le dispositif décrit par EP834813 qui prévoit de diminuer le niveau du signal de déclenchement.

Le signal basse fréquence sera notamment émis par l'unité centrale pour programmer le ou les capteurs pouvant émettre un signal de déclenchement. Il permettra ainsi d'inscrire dans la mémoire de ces capteurs les codes d'identification du ou des initiateurs qu'ils doivent pouvoir déclencher de façon autonome.

Le signal basse fréquence sera également émis par l'unité centrale pour programmer éventuellement les valeurs de retard dans un système retardateur intégré dans les capteurs et/ou les initiateurs.

Le signal basse fréquence sera enfin émis par l'unité centrale pour interroger les capteurs et/ou les initiateurs sur l'état de leur programmation, et/ou celui de leur réserve d'énergie et/ou sur les résultats d'au moins un test de fonctionnement. Il sera également émis par les capteurs et/ou initiateurs pour répondre aux interrogations faites par l'unité centrale.

La différence de fréquence entre les signaux de déclenchement et le signal d'échange de données permet aux différents circuits électroniques du dispositif de reconnaître immédiatement l'apparition d'un signal de déclenchement. Les circuits électroniques seront conçus pour que les signaux haute fréquence (déclenchement) aient priorité sur les signaux d'échange. Un capteur ou initiateur reconnaissant un signal de déclenchement interrompra ses échanges de données et se mettra en état de réception. Le ou les initiateurs visés par un signal de déclenchement se reconnaîtront par la lecture de leur code d'identification inscrit dans le message transmis à haute fréquence.

A titre d'exemple on pourra utiliser une fréquence de 250 kbits/seconde pour les signaux de déclenchement (premier et deuxième signal) et une fréquence de 15 kbits/seconde pour le signal d'échange de données (troisième signal).

Les messages échangés suivant l'une ou l'autre fréquence utiliseront un protocole d'échange approprié.

Par exemple, chaque message comprendra un indicateur de début de message (2 bits), suivi d'un identificateur du récepteur visé (capteur ou initiateur) (mot de longueur variable suivant le dispositif de protection à concevoir et notamment son nombre de récepteurs), suivi d'un mot de commande (par exemple sur 4 bits et correspondant à l'action recherchée : demande de test, réponse à un test, déclenchement, programmation...).

Si le message est un message de programmation ou de réponse à un test on placera alors à cet endroit un mot (par exemple de 4 bits) donnant la longueur du champ de données, mot qui sera suivi du champ de données de programmation ou de résultat de test (mot qui aura une longueur variable).

Le message se terminera enfin d'une façon classique par un octet de contrôle d'erreur et par un indicatif de fin de message.

Diverses variantes sont bien entendu possibles sans sortir du cadre de l'invention.

Il est ainsi possible de faire varier le protocole d'échanges de données: interrogations en tension - réponses en courant, échanges full duplex, codage des créneaux de nature différente, type, longueur et structure des messages différents....

Dans tous les cas les moyens essentiels de l'invention consistent en la capacité qui est donnée à un capteur de commander le déclenchement d'un ou plusieurs initiateurs en lieu et place de l'unité centrale, permettant ainsi de pallier une éventuelle défaillance de cette dernière et diminuant le temps de réponse, notamment pour le déclenchement de protections latérales du véhicule.

## Revendications

1. Dispositif de sécurité (1) pour véhicule comprenant au moins un actionneur, tel un initiateur pyrotechnique (3a,3b,3c,3d) destiné à déclencher un moyen de protection, tel un coussin gonflable, et au moins un capteur d'environnement (4a,4b,4c), par exemple de décélération ou de choc, capteurs et actionneurs ou initiateurs étant reliés à une unité centrale (2) électronique de commande par l'intermédiaire d'un BUS (5) de transmission de données, l'unité de commande recevant les signaux provenant des capteurs et pouvant transmettre à un ou plusieurs actionneurs ou initiateurs un premier signal de déclenchement, dispositif ***caractérisé en ce qu'***au moins un capteur (4) comporte des moyens électroniques de commande (24) susceptibles de transmettre à au moins un actionneur ou initiateur (3) un deuxième signal de déclenchement.

2. Dispositif de sécurité selon la revendication 1, caractérisé en ce que l'unité de commande (2) est configurée de façon à pouvoir, par l'intermédiaire du BUS (5), inscrire dans une première mémoire ou registre (26b) d'au moins un capteur (4) les codes d'identification du ou des actionneurs ou initiateurs (3) qu'il doit pouvoir déclencher.

3. Dispositif de sécurité selon une des revendications 1 ou 2, caractérisé en ce que l'unité de commande (2) est configurée de façon à pouvoir, par l'intermédiaire du BUS (5), inscrire une valeur de retard dans un système retardateur (29) intégré dans au moins un capteur (4) susceptible d'émettre le deuxième signal, ledit retard devant intervenir entre la détection par le capteur d'une variation du paramètre dépassant le seuil et l'émission du deuxième signal de déclenchement.

4. Dispositif de sécurité selon une des revendications 1 à 3, caractérisé en ce que l'unité de commande (2) est configurée de façon à pouvoir, par l'intermédiaire du BUS (5), inscrire une valeur de retard dans un système retardateur (19) intégré dans au moins un actionneur ou initiateur pyrotechnique (3), ledit retard devant intervenir entre la réception par l'initiateur d'un signal de déclenchement et le déclenchement effectif.

5. Dispositif de sécurité selon une des revendications 1 à 4, caractérisé en ce que le BUS (5) comprend deux fils et assure à la fois la fourniture en énergie aux actionneurs ou initiateurs et aux capteurs ainsi que la transmission des données.

6. Dispositif de sécurité selon la revendication 5, caractérisé en ce que le ou les capteurs (4) sont dotés d'une réserve d'énergie (25), telle un condensateur, qui se trouve chargée par le BUS (5) lors de la mise sous tension du dispositif.

7. Dispositif de sécurité selon une des revendications 5 ou 6, caractérisé en ce que le ou les actionneurs ou initiateurs (3) sont dotés d'une réserve d'énergie (15), telle un condensateur, qui se trouve chargée par le BUS (5) lors de la mise sous tension du dispositif.

8. Capteur (4) d'une information d'environnement, notamment de choc ou de décélération, et comportant ainsi un moyen senseur (28) d'une variation d'au moins un paramètre physique de l'environnement, capteur destiné à être mis en oeuvre dans un dispositif selon une des revendications précédentes et ***caractérisé en ce*** **qu**'il comporte des moyens électroniques de commande (24) susceptibles de transmettre à au moins un actionneur (3) ou initiateur pyrotechnique un signal de déclenchement lorsque la variation du paramètre dépasse un certain seuil.

9. Capteur selon la revendication 8, caractérisé en ce qu'il comporte une interface (23) entrée/sortie destinée à recevoir les signaux transmis par une unité centrale de commande (2) au travers d'un BUS (5) de transmission et à transmettre au travers de ce BUS des messages à l'unité centrale (2) et à au moins un actionneur ou initiateur (3).

10. Capteur selon une des revendications 8 ou 9, caractérisé en ce qu'il comporte une réserve d'énergie (25) telle un condensateur.

11. Capteur selon une des revendications 8 à 10, caractérisé en ce qu'il comporte une première mémoire ou registre (26a) destiné à recevoir les codes d'identifications du ou des actionneurs ou initiateurs (3) qu'il doit pouvoir déclencher.

12. Capteur selon la revendication 11, caractérisé en ce qu'il comporte une deuxième mémoire ou registre (26b) destiné à recevoir un code d'identification.

13. Capteur selon la revendication 12, caractérisé en ce que la deuxième mémoire ou registre (26b) est non volatile.

14. Capteur selon une des revendications 8 à 13, caractérisé en ce que la première mémoire (26a) est programmable à partir de l'unité centrale (2).

15. Capteur selon une des revendications 8 à 14, caractérisé en ce que les moyens électroniques de commande (24) comportent un système retardateur (29) permettant d'assurer l'émission du signal de déclenchement avec un retard par rapport à la détection d'une variation du paramètre dépassant le seuil.

16. Capteur selon la revendication 15, caractérisé en ce que la valeur du retard d'émission du signal de déclenchement est programmable à partir de l'unité centrale (2).

17. Capteur selon une des revendications 8 à 16, caractérisé en ce qu'il comporte des moyens (31) pouvant assurer au moins un test de bon fonctionnement.

18. Procédé de commande d'un dispositif de sécurité selon une des revendications 1 à 7, procédé dans lequel l'unité de commande (2) dialogue au travers d'un BUS (5) de transmission de données avec au moins un actionneur ou initiateur pyrotechnique (3) et au moins un capteur d'environnement (4), le dialogue se faisant par un signal (32) formé d'une succession de créneaux, un premier signal de déclenchement ayant une première fréquence étant émis sur le BUS par l'unité centrale pour déclencher le déclenchement ou l'initiation d'un ou plusieurs actionneurs ou initiateurs, procédé ***caractérisé en ce qu*'**on peut émettre sur le BUS (5) un deuxième signal de déclenchement ayant la même fréquence que le premier signal à partir d'au moins un capteur d'environnement.

19. Procédé de commande selon la revendication 18, caractérisé en ce qu'un troisième signal, ou signal d'échange de données, ayant une deuxième fréquence inférieure à celle des deux autres signaux, est émis sur le BUS (5) pour échanger les données entre l'unité centrale (2), les capteurs (4) et les actionneurs ou initiateurs (3), le premier et le deuxième signal ayant priorité sur le troisième signal.

20. Procédé de commande selon une des revendications 18 ou 19, caractérisé en ce que le deuxième signal de déclenchement et/ou le troisième signal ont la même amplitude que le premier signal.

21. Procédé de commande selon la revendication 19, caractérisé en ce que le troisième signal est utilisé par l'unité centrale (2) pour programmer au moins un capteur (4) susceptible d'émettre le deuxième signal en inscrivant dans une première mémoire ou registre (26a) de ce capteur (4) le code d'identification du ou des actionneurs ou initiateurs (3) qu'il doit pouvoir déclencher.

22. Procédé de commande selon la revendication 19, caractérisé en ce que le troisième signal est utilisé par l'unité centrale (2) pour programmer une valeur de retard dans un système retardateur (29) intégré dans au moins un capteur (4) susceptible d'émettre le deuxième signal, ledit retard devant intervenir entre la détection par le capteur d'une variation du paramètre dépassant le seuil et l'émission du deuxième signal de déclenchement.

23. Procédé de commande selon la revendication 19, caractérisé en ce que le troisième signal est utilisé par l'unité centrale (2) pour programmer une valeur de retard dans un système retardateur (19) intégré dans au moins un actionneur ou initiateur pyrotechnique (3), ledit retard devant intervenir entre la réception par l'initiateur d'un signal de déclenchement et le déclenchement effectif.

24. Procédé de commande selon la revendication 19, caractérisé en ce que le troisième signal est utilisé par l'unité centrale (2) pour interroger les capteurs (4) et/ou les actionneurs ou initiateurs (3) sur l'état de leur programmation, et/ou celui de leur réserve d'énergie (15,25) et/ou sur le résultats d'au moins un test de fonctionnement.
